(19) Europäisches Patentamt
European Patent Office
Office européen des brevets

(11) EP 4 624 518 A1

(12) EUROPEAN PATENT APPLICATION

(43) Date of publication:
**01.10.2025 Bulletin 2025/40**

(21) Application number: **24167141.1**

(22) Date of filing: **28.03.2024**

(51) International Patent Classification (IPC):
***C08J 5/18*** *(2006.01)* ***C08F 4/00*** *(2006.01)*
***C08F 4/72*** *(2006.01)* ***C08L 23/14*** *(2006.01)*

(52) Cooperative Patent Classification (CPC):
(C-Sets available)
**C08J 5/18; C08F 4/00; C08F 4/72; C08L 23/142;**
C08J 2323/14 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **WANG, Jingbo**
**4021 Linz (AT)**
- **GAHLEITNER, Markus**
**4021 Linz (AT)**
- **ZACH, Markus**
**4021 Linz (AT)**
- **HOFKO, Bernhard**
**4021 Linz (AT)**
- **TRANCHIDA, Davide**
**4021 Linz (AT)**
- **POMAKHINA, Elena**
**4021 Linz (AT)**
- **AARNIO-WINTERHOF, Minna**
**4021 Linz (AT)**

(74) Representative: **Dehns**
**10 Old Bailey**
**London EC4M 7NG (GB)**

(54) **PROCESS FOR PRODUCING BLOWN FILMS BASED ON SSC C2C3 RANDOM COPOLYMER**

(57) Process for producing blown films comprising a C2C3 random copolymer, which has been produced in the presence of a single site catalyst (SSC) and to films produced by the specific process showing improved optical performance and reduced anisotropy of the mechanical performance.

EP 4 624 518 A1

(52) Cooperative Patent Classification (CPC): (Cont.)

C-Sets
**C08L 23/142, C08L 23/142, C08K 5/0083**

## Description

The present invention is related to a process for producing blown films based on a C2C3 random copolymer, which has been produced in the presence of a single site catalyst (SSC) and to films produced by the specific process showing improved optical performance and reduced anisotropy of the mechanical performance.

## Background

Polypropylenes succeed more and more to replace polyethylenes in many technical fields, as quite often the new generation of polypropylenes have enhanced properties compared to conventional polyethylene materials. This applies also for the field of blown films where polypropylene takes advantage of molecular engineering to overcome previous material shortcomings for blown-film production, not the least due to its inherently higher temperature resistance.

The blown films sector constitutes an area of ever-increasing importance in various application segments, such as industry packaging, consumer packaging, bags and sacks, lamination films, barrier films, packaging of food or medical products, agriculture films, hygienic products and products packaging, especially when a good combination of transparency and mechanical performance is desired.

In a typical blown film extrusion process, polyolefin resin is melted in a screw extruder wherein pressure is developed on the molten resin, causing the molten resin to pass through a die having a circular orifice to form a tubular film or sleeve, also known as a "bubble". Gas, usually air, is provided to the interior of the bubble to inflate it to a desired diameter. The gas is contained within the bubble by the die and by a pair of nip rolls disposed downstream from the die. The nip rolls provide the force to pull the bubble away from the die in a machine direction ("MD") at a desired speed. The rate of extrusion of the melt, the rate of speed of the nip rolls, and the degree of inflation of the bubble together determine the final thickness of the film.

Between the die and the nip rolls, the melt cools, and undergoes a phase change to the crystalline state. A so-called "frost line" is observable at the point of the bubble at which the phase change occurs.

Conventional blown film extrusion can be generally classified as either a "stalk" process or a "pocket" process.

In stalk extrusion, an air ring, usually a single lip air ring, is disposed adjacent the die and provides stabilizing air flow generally parallel to the machine direction. Thus, the bubble maintains a relatively uniform diameter approximately equal to that of the annular die for a significant distance from the die, and eventually expands in the transverse direction ("TD") to the desired diameter due to the gas pressure within the bubble. This stalk extrusion can also be called "low neck" extrusion, whereby the neck length is around 0 to 2 times the die diameter.

In pocket extrusion, a force is applied by an air ring disposed adjacent the die to cause the bubble leaving the die to immediately expand in the transverse direction at a rate dependent on the design of the air ring. This type of rapid expansion is achieved with a so-called "dual lip" air ring designed to create a vacuum to pull the bubble in the transverse direction.

Single lip air rings are also useful in pocket extrusion, and allow slower expansion of the bubble. Such air rings do not exert as strong an outward force as do dual lip air rings.

The pocket extrusion can also be called "high neck" extrusion, whereby the neck length is about 6 to 9 times the die diameter.

Though useful and widely accepted, prior blown film extrusion processes, including prior stalk and pocket extrusion methods, do exhibit disadvantages as the blown film process is furthermore characterized by simultaneous stretching of the molten polymer in machine direction (MD) and transverse direction (TD), which generally leads to anisotropic mechanical properties of the solid film.

The demands for improving film processability and maintaining or even improving film properties are steadily increasing for packaging applications, including mono- and multilayer packaging film constructions. For example increasing processing speed and output while reducing the anisotropy of physical properties and maintaining or even improving optical performance are important aspects in this respect.

It is especially desired that the difference of one or more, preferably all of the properties selected from the tear resistance, the tensile modulus and the strain at break of the film in machine and transverse direction is reduced to a great extent.

Blown films from ethylene-propylene random copolymers (C2C3-RACOs) are used in many packaging applications today, constituting a major fraction of both mono- and multilayer packaging film constructions.

Several patents have been filed in the blown film area based on ethylene-propylene random copolymers (C2C3-RACOs).

For Example WO 2020239562 describes a C2C3 random copolymer (A) made with a single site catalyst and having

(a) a total ethylene content in the range of from 3.0 to 7.5 wt.-%;

(b) a melt flow rate $MFR_2$ (230 °C/2.16kg) measured according to ISO 1133 in the range of from 0.5 to 5.0 g/10min and
(c) a melting temperature Tm as determined by DSC according to ISO 11357 of from 110 °C to 135 °C.

Blown films of Inventive Examples 1 and 2 made of such a C2C3 random copolymer have a tensile modulus determined according to ISO 527-3 at 23°C on blown films with a thickness of 50 μm in machine direction as well as in transverse direction of below 1000 MPa and an optomechanical ability (OMA) determined according the formula given below:

$$\text{OMA} = \frac{Tensile\ Modulus\ (MD)[MPa]*DDI(g)}{Haze\ (50\ \mu m)[\%]}$$

of at least 3000 to below 15000 [MPa*g/%]. The polymers as defined in said application are, however, based on Ziegler-Natta type catalysts and exhibit a high content of xylene cold solubles (XCS), limiting their applicability for sensitive applications.

EP 4253453 A1 describes blown films made of a polypropylene composition comprising a C2C3 random copolymer made with a single site catalyst and a polyethylene glycol polymer processing aid, whereby the polymer processing aid is used to eliminate or at least to reduce melt fracture, to increase gloss and to reduce surface defects improving surface smoothness. No guidance is given, however, as how to optimize performance by adapting the processing parameters, as all examples have been prepared at identical conditions.

Although a lot of development work has already been done in the single-site polypropylene based blown films, it is still of interest to identify optimum film processing conditions for such grades in order to fulfil the demands like increased processing speed and output while obtaining reduced anisotropy of physical properties and maintaining or even improving optical performance.

Due to their narrow molecular weight distribution (MWD), C2C3-RACOs based on single-site catalysts (SSC) are more sensitive to changes in processing conditions, thus it is challenging to reach all desired effects at the same time.

It was therefore the object of the present invention to find an improved process for producing blown films using C2C3-RACOs based on single-site catalysts (SSC), which allows for the production of blown films having reduced anisotropy of physical properties and maintaining or even improving optical performance.

It is especially desired that one or more, preferably all of the properties selected from tear resistance, tensile modulus and the strain at break of the films in machine and transverse direction is reduced to a great extent.

Thus, according to a first aspect the present invention is directed to a process for producing blown films comprising an ethylene-propylene random copolymer (C2C3-RACO), the process comprises the steps of

a) providing an ethylene-propylene random copolymer (C2C3-RACO) having

- a melt flow rate ($MFR_2$), as determined according to ISO 1133 at 230 °C and a load of 2.16 kg, in the range of 1.0 to 4.0 g/10 min,
- an ethylene content, measured by $^{13}$C-NMR, in the range of 0.5 to 2.5 wt.-%,
- a melting temperature, measured according to ISO 11357/part 3/ method C2, in the range of 135 to 155 °C
- a polydispersity index PI ($10^5$/Gc), measured according to ISO 6271-1 at 200 °C, in the range of 1.4 to 2.8 and
- 2,1 erythro regio-defects, measured by $^{13}$C NMR, in the range of > 0.10 to 1.00 mol-%,

whereby the ethylene-propylene random copolymer (C2C3-RACO) optionally comprises one or more α-nucleating agent(s) in an amount of 0 up to 0.5 wt.-%, based on the total weight of the ethylene-propylene random copolymer (C2C3-RACO),

b) producing a blown film based on the C2C3-RACO, whereby the used blow-up ratio (BUR), neck length (NL) and melt temperature ($T_{melt}$) are correlated into a processing intensity factor (PIF) as defined by equation (I)

$$\text{PIF} = T_{melt}*\text{BUR}*\text{NL-factor (I)},$$

wherein the NL-factor is 1, in case a pocket process is used and

wherein the NL-factor is 2, in case a stalk process is used,

the processing intensity factor (PIF) being at least 400 °C,

obtaining a blown film comprising the ethylene-propylene random copolymer (C2C3-RACO) having a thickness in the range of 5 to 300 μm and having

i) an Elmendorf tear resistance, measured according to ISO 6383/2 on a 50 μm blown film in machine direction (MD) in the range of 2.0 to 6.0 N/mm and in transverse direction (TD) in the range of 3.5 to 10.0 N/mm

ii) haze, measured according to ASTM D 1003-00 on a 50 μm blown film in the range of 0.5 to 10.0% and

iii) mechanical anisotropy for the strain at break (S@B) in machine (MD) and transverse (TD) direction ($S@B_{MD}/S@B_{TD}$), whereby the strain at break in machine (MD) and transverse (TD) direction is measured according to ISO 527-3, in the range of 1.0 to 90.0.

According to a second aspect the present invention is directed blown films comprising, preferably consisting of an ethylene-propylene random copolymer (C2C3-RACO), obtainable by the above described process.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.
In the following the invention is defined in more detail.
Unless clearly indicated otherwise, use of the terms "a," "an," and the like refers to one or more.
In the following, amounts are given in % by weight (wt.-%) unless it is stated otherwise.

## Detailed Description

### *ethylene-propylene random copolymer (C2C3-RACO)*

The ethylene-propylene random copolymer has a melt flow rate ($MFR_2$), as determined according to ISO 1133 at 230 °C and a load of 2.16 kg, in the range of 1.0 to 4.0 g/10 min, preferably in the range of from 1.2 to 3.5 g/10 min and more preferably in the range of from 1.5 to 3.0 g/10 min.
The ethylene-propylene random copolymer furthermore has a melting temperature, measured according to ISO 11357 / part 3 / method C2, in the range of 135 to 155 °C, preferably in the range of 138 to 152 °C, and more preferably in the range of 140 to 150 °C.
In addition, the ethylene-propylene random copolymer may have a crystallization temperature, measured according to ISO 11357 / part 3 / method C2, in the range of 110 to 130 °C, preferably in the range of from 112 to 125 °C, and more preferably in the range of from 114 to 120 °C.
The term "ethylene-propylene random copolymer" indicates that said copolymer consists only of units derived from ethylene and propylene, wherein the propylene units make up the major part of the ethylene-propylene copolymer. Accordingly, the ethylene content of the ethylene-propylene copolymer is in the range of 0.5 to 7.0 wt.-%, preferably in the range of 0.8 to 6.0 wt.-%, more preferably in the range of 1.0 to 4.0 wt.-%, yet more preferably in the range of 1.2 to 3.5 wt.-%, measured by $^{13}C$-NMR.
Further the ethylene-propylene random copolymer used according to this invention must be produced with a metallocene catalyst, which is reflected by the presence of 2,1 erythro regio-defects in the polymer chain. Further information regarding the polymerization conditions is provided in detail below. Accordingly, the ethylene-propylene random copolymer according to this invention has 2,1 erythro regio-defects, measured by 13C NMR, in the range of >0.10 to 1.00 mol-%, preferably in the range of 0.35 to 0.85 mol-%, more preferably in the range of 0.45 to 0.75 mol-%.
A further characteristic of the ethylene-propylene random copolymer, due to its manufacture with a metallocene catalyst, is its rather low amounts of xylene cold solubles. Thus, it is preferred that the ethylene-propylene random copolymer has a xylene cold soluble (XCS) fraction, determined at 25 °C according to ISO 16152, in the range of 0.1 to 2.0 wt.-%, more preferably in the range of 0.2 to 1.5 wt.-%, more preferably in the range of 0.3 to 1.0 wt.-%.
The polydispersity index (PI), of the ethylene-propylene random copolymer is in the range of 1.4 to 2.8 $Pa^{-1}$, preferably in the range of 1.8 to 2.6 $Pa^{-1}$ and more preferably in the range of 2.0 to 2.4 $Pa^{-1}$.
The above described PI is measured by dynamic shear measurements complying with ISO 6721-1 and ISO 6721-10 at a temperature of 200 °C.
The term "ethylene-propylene random copolymer" shall further indicated that the copolymer is not a heterophasic

system. Accordingly the ethylene-propylene random copolymer used according to this invention is monophasic as well understood by the skilled person. In other words, the ethylene-propylene random copolymer does not comprise polymer components, which are not miscible with each other, as this is the case for heterophasic propylene copolymers. In contrast to monophasic systems, heterophasic systems comprise a continuous polymer phase, like a polypropylene, in which a further non-miscible polymer, like an elastomeric polymer, is dispersed as inclusions. Said polypropylene systems containing a polypropylene matrix and inclusions as a second polymer phase would by contrast be called heterophasic and are not part of the present invention. The presence of second polymer phases or the so-called inclusions is for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

In a preferred embodiment, the ethylene-propylene copolymer comprises two ethylene-propylene copolymer fractions.

That is, the ethylene-propylene random copolymer comprises, preferably consists of,

30.0 to 70.0 wt.-% of a polymer fraction (A-1) having

(i) an ethylene content in the range of 0.2 to 3.0 wt.-% and
(ii) a melt flow rate $MFR_2$, measured according to ISO 1133 at 230 °C and at a load of 2.16 kg, in the range of 2.0 to 5.0 g/10min and

70.0 to 30.0 wt.-% of polymer fraction (A-2) having

(i) an ethylene content in the range of from 1.5 to 10.0 wt.-% and

(ii) a melt flow rate MFR2, measured according to ISO 1133 at 230 °C and at a load of 2.16 kg, in the range of from 0.1 to 3.0 g/10min,

whereby the melt flow rate $MFR_2$ of polymer fraction (A-2) is lower than the $MFR_2$ of polymer fraction (A-1) and

whereby the ethylene content of polymer fraction (A-2) is higher than the ethylene content of polymer fraction (A-1) and

whereby the total amount of the first polymer fraction (A-1) and the second polymer fraction (A-2) together, based on the ethylene-propylene random copolymer, is at least 98 wt.-%, preferably the ethylene-propylene random copolymer consists of the first polymer fraction (A-1) and the second polymer fraction (A-2).

Preferably, the ethylene-propylene random copolymer comprises 40.0 to 65.0 wt.-% of polymer fraction (A-1) and 35.0 to 60.0 wt.-% of polymer fraction (A-2).

More preferably, the ethylene-propylene random copolymer comprises 45.0 to 62.0 wt.-% of polymer fraction (A-1) and 38.0 to 55.0 wt.-% of polymer fraction (A-2).

Most preferred ratios of polymer fraction (A-1) to polymer fraction (A-2) are 60:40 or 50:50.

Polymer fraction (A-1) preferably has an ethylene content in the range of from 0.3 to 2.0 wt.-% and more preferably in the range of from 0.4 to 1.0 wt.-%.

The melt flow rate $MFR_2$ measured according to ISO 1133 at 230 °C and at a load of 2.16 kg, of polymer fraction (A-1) is preferably in the range of from 2.5 to 4.5 g/10min, more preferably in the range of from 2.8 to 4.2 g/10min.

Polymer fraction (A-2) preferably has an ethylene content in the range of from 2.0 to 8.0 wt.-% and more preferably in the range of from 2.5 to 6.0 wt.-%.

The melt flow rate $MFR_2$, measured according to ISO 1133 at 230 °C and at a load of 2.16 kg, of polymer fraction (A-2) is preferably in the range of from 0.2 to 2.0 g/10min and more preferably in the range of from 0.3 to 1.5 g/10min.

In this preferred embodiment the present ethylene-propylene random copolymer is especially characterized by the presence of at least two melting peak temperatures, whereby one melting peak temperature (Tm1) is in the range of 135 to 155 °C, preferably in the range of 138 to 152 °C, more preferably in the range of 140 to 150 °C and another melting peak temperature (Tm2) in the range of 130 to 139 °C, more preferably in the range of 131 to 137 °C, whereby the $2^{nd}$ melting point (Tm2) is lower than the first melting point (Tm1).

As mentioned above the ethylene-propylene random copolymer according to this invention must be produced with a metallocene catalyst.

Preferably, the ethylene-propylene random copolymer is produced in a sequential polymerization process using a specific metallocene catalyst. Accordingly, the ethylene-propylene copolymer must be produced with a metallocene

catalyst as disclosed in WO 2019/179959, which is incorporated by reference herewith.

The used metallocene catalyst complexes for the manufacture of the ethylene-propylene copolymer is in particular defined by formula (I):

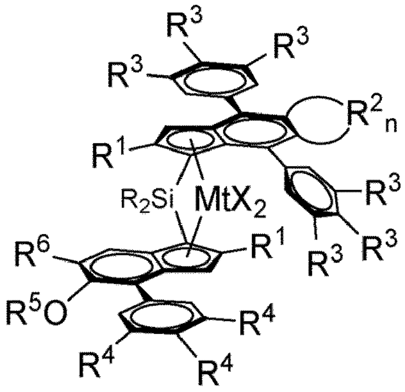

Formula (I)

In a complex of formula (I) it is preferred if Mt is Zr or Hf, preferably Zr; each X is a sigma ligand. Most preferably, each X is independently a hydrogen atom, a halogen atom, $C_1$-$C_6$ alkoxy group or an R' group, where R' is a $C_1$-$C_6$ alkyl, phenyl or benzyl group. Most preferably, X is chlorine, benzyl or a methyl group. Preferably, both X groups are the same. The most preferred options are two chlorides, two methyl or two benzyl groups, especially two chlorides. For further preferred definitions of the residues, reference is made to WO 2019/179959.

Specifically preferred metallocene catalyst complexes are:

rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride (MC-1);

rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride (MC-2);

rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride (MC-3)

The corresponding zirconium dimethyl analogues of the above defined three catalysts are also possible but less preferred. The most preferred catalyst is the one used for the inventive examples, i.e. MC-2.

*Cocatalyst*

To form an active catalytic species it is normally necessary to employ a cocatalyst as is well known in the art. Here, a cocatalyst system comprising a boron containing cocatalyst and an aluminoxane cocatalyst is used in combination with the above defined metallocene catalyst complex.

Typical aluminoxane cocatalysts are state of the art. The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

As mentioned above the aluminoxane cocatalyst is used in combination with a boron containing cocatalyst.

Boron based cocatalysts of interest include those of formula (Z)

$$BY_3 \qquad (Z)$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, toluyl, benzyl groups, p-fluorophenyl, 3,5-difluorophenyl pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane. Particular preference is given to tris(pentafluorophenyl)borane.

Preferred ionic compounds which can be used include: triethylammoniumtetra(phenyl)borate, tributylammoniumtetra(phenyl)boratetrimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl) borate, N,N-diethylaniliniumtetra(phenyl)borate, N, N-dimethylaniliniumtetrakis(pentafluorophenyl)borate, N, N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate.

Preference is given to triphenylcarbeniumtetrakis(pentafluorophenyl) borate, N,N-dimethylcyclohexylammoniumtetrakis(pentafluorophenyl)borate or N,N- dimethylbenzyl-ammoniumtetrakis(pentafluorophenyl)borate. Certain boron cocatalysts are especially preferred. Preferred borates comprise the trityl ion. Thus, the use of N,N-dimethylammonium-tetrakispentafluorophenylborate and Ph3CB(PhF5)4 and analogues therefore are especially favoured.

It is especially preferred the combination of a borate cocatalyst, like Trityl tetrakis(pentafluorophenyl) borate, and methylaluminoxane (MAO).

Suitable amounts of cocatalyst will be well known to the skilled man.

The molar ratio of boron to the metal ion of the metallocene may be in the range of 0.5:1 to 10:1 mol/mol, preferably in the range of 1:1 to 10:1, especially in the range of 1:1 to 5:1 mol/mol.

The molar ratio of Al in the aluminoxane to the metal ion of the metallocene may be in the range of 1:1 to 2000:1 mol/mol, preferably in the range of 10:1 to 1000:1, and more preferably in the range of 50:1 to 500:1 mol/mol.

*Catalyst Manufacture*

The metallocene catalyst complex can be used in combination with a suitable cocatalyst as a catalyst for the polymerization of propylene, e.g. in a solvent such as toluene or an aliphatic hydrocarbon, (i.e. for polymerization in solution), as it is well known in the art. Preferably, polymerization of propylene takes place in the condensed phase or in gas phase.

The catalyst of the invention can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably, the support is a porous material so that the complex may be loaded into the pores of the support, e.g. using a process analogous to those described in WO 94/14856, WO 95/12622 and WO 2006/097497. The particle size is not critical but is preferably in the range of 5 to 200 pm, more preferably in the range of 20 to 80 pm. The use of these supports is routine in the art.

Alternatively, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerization medium.

Also, no external carrier may be used but the catalyst is still presented in solid particulate form. Thus, no external support material, such as inert organic or inorganic carrier, for example silica as described above is employed.

In order to provide the catalyst in solid form but without using an external carrier, it is preferred if a liquid/liquid emulsion system is used. Full disclosure of the necessary process can be found in WO 03/051934, which is herein incorporated by reference

The most preferred catalyst system is defined in the example section below (single site catalyst system 1 (SSCS1)).

The polymerization conditions in the sequential polymerization of the ethylene-propylene copolymer are nothing specific and well known to the skilled person. Typically the first polymer fraction (A-1) is produced in a slurry reactor and the second polymer fraction (A-2) is produced in a gas phase reactor in the presence of a the first polymer fraction (A-1). Regarding such multistage processes a preferred process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479, WO 00/68315, WO2015/082379 or in WO2015/011134.

It is well known that prior to the main polymerization a prepolymerization may take place.

The prepolymerization may be carried out in any type of continuously operating polymerization reactor. The prepolymerization may be carried out in a slurry polymerization or a gas phase polymerization reactor, preferably in a loop prepolymerization reactor.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization is carried out in a continuously operating reactor at an average residence time of 5 minutes up to 90 min. Preferably the average residence time is within the range of 10 to 60 minutes and more preferably within the range of 15 to 45 minutes.

The prepolymerization reaction is typically conducted at a temperature of 0 to 50 °C, preferably from 10 to 45 °C, and more preferably from 15 to 35 °C.

The pressure in the prepolymerization reactor is not critical but must be sufficiently high to maintain the reaction mixture in liquid phase and is generally selected such that the pressure is higher than or equal to the pressure in the subsequent polymerization. Thus, the pressure may be from 20 to 100 bar, for example 30 to 70 bar.

In case a prepolymerization step is performed, all of the catalyst mixture is introduced to the prepolymerization step.

The precise control of the prepolymerization conditions and reaction parameters is within the skill of the art.

As mentioned above the first polymer fraction (A-1) is preferably produced in a slurry phase polymerization step, i.e. in the liquid phase.

The temperature in the slurry polymerization is typically from 50 to 110 °C, preferably from 60 to 100 °C and in particular from 65 to 95 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be in the range from 1 to 8 hours, like from 1.5 to 4 hours.

Into the slurry polymerization stage other components may also be introduced as it is known in the art. Thus, hydrogen is added to control the molecular weight of the polymer.

The slurry polymerization stage is followed by the gas phase polymerization stage in which the second polymer fraction (A-2) is produced. It is preferred to conduct the slurry directly into the gas phase polymerization zone without a flash step between the stages. This kind of direct feed is described in EP-A-887379, EP-A-887380, EP-A-887381 and EP-A-991684.

That is, the reaction product of the slurry phase polymerization, i.e. the first polymer fraction (A-1), which preferably is carried out in a loop reactor, is then transferred to the subsequent gas phase reactor in which the second polymer fraction (A-2) is produced.

The polymerization in gas phase may be conducted in fluidized bed reactors, in fast fluidized bed reactors or in settled bed reactors or in any combination of these. When a combination of reactors is used then the polymer is transferred from one polymerization reactor to another. However, it is preferred that the second polymer fraction (A-2) is produced in one gas phase reactor.

Typically the gas phase reactor is operated at a temperature within the range of from 50 to 100 °C, preferably from 65 to 95 °C. The pressure is suitably from 10 to 40 bar, preferably from 15 to 30 bar

According to this invention, the first polymer fraction (A-1) is produced in the first step, i.e. in a first reactor, e.g. the loop reactor, whereas the second polymer fraction (A-2) is produced in the subsequent step, i.e. in the second reactor, e.g. the gas phase reactor. In case the polymerization process of the first polymer fraction (A-1) and the second polymer fraction (A_2) contains also a prepolymerization step, then the first polymer fraction (A-1) according to this invention is the polymer produced in the prepolymerization together with the polymer produced in the subsequent first step, in the first reactor, e.g. the loop reactor, whereas the second polymer fraction (A-2) is the product of the second reactor, e.g. the gas phase reactor. The amount of polymer produced in the prepolymerization step is comparatively small compared to the quantities produced in the first reactor and therefore has no great influence on the properties of the polymer fraction from the first reactor.

The preferred properties of the first polymer fraction (A-1) and the second polymer fraction (A-2) have been mentioned above.

### *alpha-nucleating agent*

The ethylene-propylene random copolymer (C2C3-RACO) optionally comprises at least one alpha-nucleating agent. Accordingly the ethylene-propylene random copolymer (C2C3-RACO) optionally comprises one or more alpha-nucleating agent(s), which is/are present in an amount in the range of 0.0 to 0.5 wt.-%, more preferably in the range of 0.01 to 0.5 wt.-%, yet more preferably in the range of 0.03 to 0.4 wt.-%, most preferably in the range of 0.05 to 0.3 wt.-%, based on the total weight of the ethylene-propylene random copolymer.

In an embodiment of the present invention it is preferred that the ethylene-propylene random copolymer (C2C3-RACO) includes at least one alpha-nucleating agent in the range of 0.01 to 0.5 wt.-%, yet more preferably in the range of 0.03 to 0.4 wt.-%, most preferably in the range of 0.05 to 0.3 wt.-%, based on the total weight of the ethylene-propylene random copolymer.

Preferred examples of the alpha-nucleating agents are disclosed in "Plastics Additives Handbook", Hans Zweifel, 6th Edition, p. 967 - 990.

Among all alpha-nucleating agents, bicyclo (2.2.1) heptane-2,3-dicarboxylic acid, di-sodium salt as for instance used in Hyperform familiy of Milliken (e.g. HPN-20E), hydroxybis[2,4,8,10-tetrakis(1,1-dimethylethyl)-6-hydroxy-12H-dibenzo-[d,g]-dioxa-phoshocin-6-oxidato] aluminium as used in the nucleating agents ADK NA-21, NA-21 E, NA-21 F, etc., metal salts of 2,2'-methylene bis(4,6-di-tert-butylphenyl)phosphat, like sodium-2,2'-methylene-bis(4,6-di-t-butyl-phenyl)phosphate (ADK NA-11), aluminium-hydroxy-bis[2,2'-methylene-bis(4,6-di-t-butyl-phenyl)-phosphate], 2,2'-methylene bis-(2,6-di-tert. butylphenyl) phosphate lithium salt (as used in ADK STAB NA-71), sorbitol-based nucleating agents, i.e. di(alkylbenzylidene)sorbitols like 1,3:2,4-25 dibenzylidene sorbitol, 1,3:2,4-di(4-methylbenzylidene) sorbitol, 1,3:2,4-di(4- ethylbenzylidene) sorbitol and 1,3:2,4-Bis(3,4-dimethylbenzylidene) sorbitol, as well as nonitol derivatives, like 1,2,3-trideoxy-4,6;5,7-bis-O-[(4-propylphenyl)methylene] nonitol, and benzene-trisamides like substituted 1,3,5-benzenetrisamides as N,N',N"-tris-tert-butyl-1,3,5- benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein metal salts of 2,2'-methylene bis(4,6-di-tert-butylphenyl)phosphat, like 2,2'- methylene bis-(2,6-di-tert. butylphenyl) phosphate lithium salt (e.g. NA-71), bicyclo (2.2.1) heptane-2,3-dicarboxylic acid, di-sodium salt (e.g. HPN-20E), hydroxy-bis[2,4,8,10-tetrakis(1,1-dimethylethyl)-6-hydroxy-12H-dibenzo-[d,g]-dioxa-phoshocin-6-oxidato]aluminium( e.g. NA-21), and polymeric nucleating agents selected from the group consisting of vinylcycloalkane polymers and vinylalkane polymers are particularly preferred.

Preferably, the ethylene-propylene random copolymer contains at least one alpha-nucleating agent selected from the group consisting of metal salt of 2,2'-methylene bis(4,6-di-tert-butylphenyl)phosphat, hydroxy-bis[2,4,8,10-tetrakis(1,1-dimethylethyl)-6-hydroxy-12H-dibenzo-[d,g]-dioxa-phoshocin-6-oxidato] aluminium (e.g. NA-21), polymeric nucleating agent and bicyclo (2.2.1) heptane-2,3-dicarboxylic acid, di-sodium salt (HPN-20E). Still more preferably the alpha-nucleating agent(s) is/are selected from the group consisting of 2,2'-methylene bis-(2,6-di-tert. butylphenyl) phosphate lithium salt (e.g. NA-71), bicyclo (2.2.1) heptane-2,3-dicarboxylic acid, di-sodium salt (e.g. HPN-E20) and poly vinylcyclohexane (p-VCH). Yet more preferably, the alpha-nucleating agent(s) present in the polymer composition is/are selected from the group consisting of 2,2'- methylene bis-(2,6-di-tert. butylphenyl) phosphate lithium salt (e.g. NA-71), hydroxy-bis[2,4,8,10-tetrakis(1,1-dimethylethyl)-6-hydroxy-12H-dibenzo-[d,g]-dioxa-phoshocin-6-oxidato] aluminium (like NA-21), bicyclo (2.2.1) heptane-2,3-dicarboxylic acid, di-sodium salt (HPN-20E) and poly vinylcyclohexane (p-VCH).

Thus, it is especially preferred that the alpha-nucleating agent(s) present in the ethylene-propylene random copolymer is/are selected from the group consisting of hydroxybis[2,4,8,10-tetrakis(1,1-dimethylethyl)-6-hydroxy-12H-dibenzo-[d,g]-dioxa-phoshocin-6-oxidato] aluminium (e.g. NA-21), poly vinylcyclohexane (p-VCH), 2,2'- methylene bis-(2,6-di-tert. butylphenyl) phosphate lithium salt (e.g. NA-71) and bicyclo (2.2.1) heptane-2,3-dicarboxylic acid, di-sodium salt (HPN-20E), wherein further the total amount of the alpha-nucleating agent(s), based on the total amount of the ethylene-propylene random copolymer, is in the range of 0.01 to 0.5 wt.-%.

***Further components***

As stated above the ethylene-propylene random copolymer may, in addition to the optional alpha-nucleating agent, comprise typical additives other than the alpha-nucleating agent, like antioxidants, antistatic agents and antifogging agents. Accordingly, the term "additive(s)" according to this invention does not cover alpha-nucleating agents and polymer processing aids. Such additives may be premixed with a carrier material, which is typically a polypropylene. According to this invention such carrier material, e.g. such additional polypropylene, is considered as being part of the additives.

Such additives may also be added in the film blowing process in the form of a masterbatch based on a suitable polypropylene homo- or copolymer. Typical processing aid masterbatches used to eliminate melt fracture and/or sharkskin effects on the blown film surface include masterbatches with fluoropolymers and/or fluoroelastomers, alternately without fluorinated components but polysiloxanes or other elastomeric components, in both cases optionally comprising antiblocking agents like silica or talc. Typical commercial examples for such masterbatches are DAIKIN PPA DA-310ST from Daikin Industries (Japan), SILIMER 5091 from Chengdu Silike Technology (China) and POLYBATCH AMF 905 or POLYBATCH AMF 929 from LyondellBasell Industries (USA).

Typically, the total amount of additional additives, which also includes the amount of carrier material, based on the ethylene-propylene random copolymer, shall not exceed 2.0 wt.-%, preferably is in the range of 0.05 to 1.5 wt.-%.

The ethylene-propylene random copolymer (C2C3-RACO), together with the optional alpha nucleating agent(s) and optional further additives, is present in the blown film in an amount of at least 80 wt.-%, preferably in an amount of at

least 90 wt.-%, more preferably in an amount of at least 95.-wt.% and most preferably in an amount of 100 wt.-%, based on the total weight of the blown film.

***Blown film***

The present invention is related to a process for producing blown films comprising, preferably consisting of the above described ethylene-propylene random copolymer.

The general principles of the blown film process are known to an art skilled person.

As is known, blown films are obtained by extrusion technology in which a tube of the molten propylene polymer is extruded through a die and inflated to several times its initial diameter to form a thin film bubble. This bubble is then collapsed obtaining a film.

Regarding the manufacture of blown films from polypropylene reference is made inter alia to the "Polypropylene Handbook" of "Nello Pasquini, 2nd edition (pages 412 to 414).

Conventional blown film extrusion can be generally classified as either a "stalk" process or a "pocket" process.

Important parameters in the blow film process are inter alia:

Blow-up ratio (BUR): Diameter of the bubble / Diameter of the die
Neck length (NL) or neck height or Frost Line Height: point where the bubble no longer changes shape: both the diameter and velocity reach their final value at the frost line.

According to the present invention, the used blow-up ratio (BUR), neck length (NL) and melt temperature ($T_{melt}$) are correlated into a processing intensity factor (PIF) as defined by equation (I)

$$PIF = T_{melt}*BUR*NL\text{-}factor \text{ (I)},$$

wherein the NL-factor is 1, in case a pocket process is used and

wherein the NL-factor is 2, in case a stalk process is used,

the processing intensity factor (PIF) being at least 400 °C.

Preferably, the processing intensity factor (PIF) is at least 600 °C, more preferably at least 800 °C and yet more preferably at least 1000 °C. A reasonable upper limit for the processing intensity factor (PIF) is 2200°C.

The blown extrusion can preferably be effected at a melt temperature ($T_{melt}$) in the range of 180 to 260 °C, whereby cooling by water or preferably by blowing gas (generally air) is done at a temperature of 5 to 50 °C.

Preferably the melt temperature ($T_{melt}$) is in the range of 190 to 250 °C, more preferably in the range of 200 to 250 °C and most preferably in a range of 205 to 245 °C, like 210 to 245 °C.

The blow up ratio should generally be in the range of from 1.5 to 4.0, and is preferably in the range of from 2.0 to 3.5 and more preferably in the range of from 2.0 to 3.0.

As mentioned above, the neck length (NL) factor in case a pocket process is used is 1, whereas in case a stalk process is used, the NL-factor is 2.

In a preferred embodiment of the present invention, the blown film is produced with a stalk process, i.e. high neck extrusion, thus the NL-factor being 2.

The cooling air temperature is preferably in the range of 5 to 25 °C, more preferably in the range of 10 to 18 °C.

The films obtained according to the present invention are mono-layer films having a thickness of 5 to 300 μm, preferably 10 to 200 μm, more preferably 20 to 150 μm and most preferably 30 to 80 μm.

The films obtained according to the present invention are characterized by advantageous properties.

Thus, the films obtained according to the present invention have

i) an Elmendorf tear resistance, measured according to ISO 6383/2 on a 50 μm blown film in machine direction (MD) in the range of 2.0 to 6.0 N/mm and in transverse direction (TD) in the range of 3.5 to 10.0 N/mm.

Preferably, the Elmendorf tear resistance, measured according to ISO 6383/2 on a 50 μm blown film in machine direction (MD) is in the range of 2.5 to 5.0 N/mm and in transverse direction (TD) in the range of 4.0 to 9.0 N/mm.

The mechanical anisotropy for the Elmendorf tear resistance (TR) in machine (MD) and transverse (TD) direction ($TR_{MD}/TR_{TD}$), whereby the Elmendorf tear resistance in machine (MD) and transverse (TD) direction is measured according to ISO 6383/2, in the range of 0.2 to 1.1, preferably 0.3 to 1.1, more preferably 0.5 to 1.1, yet more preferably 0.7

to 1.1 and most preferably 0.9 to 1.1.

Further, the films obtained according to the present invention have

ii) a haze, measured according to ASTM D 1003-00 on a 50 μm blown film in the range of 0.5 to 10.0%, preferably 0.8 to 8.0%, more preferably 1.0 to 6.0%, yet more preferably 1.0 to 4.0%:

In addition, the films obtained according to the present invention have

iii) a mechanical anisotropy for the strain at break (S@B) in machine (MD) and transverse (TD) direction ($S@B_{MD}/S@B_{TD}$), whereby the stain at break in machine (MD) and transverse (TD) direction is measured according to ISO 527-3 on a 50 μm blown film, in the range of 1.0 to 90.0, preferably in the range of 1.5 to 70.0, more preferably 1.8 to 50.0 and most preferably 2.0 to 45.0. According to a specifically preferred embodiment, the mechanical anisotropy for the strain at break (S@B) in machine (MD) and transverse (TD) direction ($S@B_{MD}/S@B_{TD}$) is in the range of 2.0 to 5.5.

In a preferred embodiment, the films obtained according to the present invention have one or more, preferably two or more, most preferably all of parameters iv) to viii)

iv) a tensile modulus in machine (MD) and transverse (TD) direction, measured according to ISO 527-3 on a 50 μm blown film, in the range of 1350 to 1700 MPa, preferably 1400 to 1650 MPa.

v) a mechanical anisotropy for the tensile modulus (TM) in machine (MD) and transverse (TD) direction ($TM_{MD}/TD_{TD}$), whereby the tensile modulus in machine (MD) and transverse (TD) direction is measured according to ISO 527-3 on a 50 μm blown film, in the range of 0.8 to 1.3, preferably in the range of 0.9 to 1.2, more preferably 1.0 to 1.1.

vi) a clarity in machine (MD) and transverse (TD) direction, determined according to ASTM D1003-00 on blown films with a thickness of 50 μm of at least 50.0% up to 100.0%, preferably of at least 55.0% to 90.0% and more preferably of at least 60.0% up to 85.0%.

vii) a gloss, determined at 45° according to ASTM D2457 on blown films with a thickness of 50 μm of at least 93.0% up to 100.0%, preferably of at least 95.0% up to 100.0% and more preferably of at least 97.0% up to 100.0%.

viii) a dart drop impact strength (DDI), measured according to ISO 7765-1:1988 / Method A on a 50 μm blown film, in the range of 25 to 50 g, preferably 28 to 45 g and more preferably 30 to 40 g.

In a further preferred embodiment the films obtained according to the present invention do not only show improvements in one or more of these mechanical or optical properties, but have a well-balanced and improved overall performance.

Such an improvement in the overall performance of a blown film can be expressed by the optomechanical ability: In view of the present invention optomechanical ability (OMA) is understood as the ratio of mechanical (especially dart-drop impact strength (DDI) and tensile (MD)) behaviour, to optical performance, namely haze, wherein the mechanical properties are targeted to be as high as possible and the optical performance in the sense of haze is desired to be as low as possible.

The optomechanical ability can be determined by multiplying Tensile Modulus (MD) and dart-drop impact strength (DDI) and putting this product in relation to haze determined on 50 μm blown film.

The optomechanical ability (OMA) is therefore determined according the formula given below:

$$OMA = \frac{Tensile\ Modulus\ (MD)[MPa] * DDI(g)}{Haze\ (50\ \mu m)[\%]}$$

Thus in one further embodiment of the present invention, the optomechanical ability (OMA) of films determined on 50 μm blown film is at least 5000 [MPa*g/%] up to 80000 [MPa*g/%], preferably in the range of from 6000 [MPa*g/%] up to 70000 [MPa*g/%], and more preferably in the range of from 8000 [MPa*g/%] up to 50000 [MPa*g/%].

According to a second aspect the present invention is directed to blown films comprising, preferably consisting of the above described ethylene-propylene random copolymer (C2C3-RACO) themselves, obtainable by the above described process and having at least properties i) to iii) and optionally in addition one or more, preferably two or more, most preferably all of parameters iv) to viii) as described above.

Such films show in a preferred embodiment an improved and well balanced overall performance, expressed by the optomechanical ability as defined above.

Such films can be used as monolayer film or as one layer of a multilayer film for packaging applications, like dry food packaging, liquid or creamy food packaging, pharmaceutical packaging and non-food packaging. Due to the high melting point of the employed polypropylene, the films are especially suitable for packaging requiring heat sterilization. If

used in a multilayer packaging, the films may be combined with sealing layers, heat protection layers and barrier layers as commonly applied in such multilayer constructions.

The following definitions of terms and determination methods apply for the above general description of the invention as well as to the below examples unless otherwise defined.

## Measuring Methods

### Calculations:

### Calculation of comonomer content of the second polymer fraction (A-2):

$$\frac{C(A) - w(A1)x\,C(A1)}{w(A2)} = C(A2) \quad (I)$$

wherein

w(A-1) is the weight fraction [in wt.-%] of the first polymer fraction (A-1),
w(A-2) is the weight fraction [in wt.-%] of second polymer fraction (A-2),
C(A-1) is the comonomer content [in wt.-%] of the first polymer fraction (A-1),
C(A) is the comonomer content [in wt.-%] of the C2C3 random copolymer (A),
C(A-2) is the calculated comonomer content [in wt.-%] of the second polymer fraction (A-2).

### Calculation of melt flow rate $MFR_2$ (230 °C) of the polymer fraction (A-2):

$$MFR(A2) = 10^{\left[\frac{\log(MFR(A)) - w(A1)\,x\,\log(MFR(A1))}{w(A2)}\right]} \quad (II)$$

wherein

w(A1) is the weight fraction [in wt.-%] of the polymer fraction A-1
w(A2) is the weight fraction [in wt.-%] of the polymer fraction A-2,
MFR(A1) is the melt flow rate $MFR_2$ (230 °C) [g/10min] of the polymer fraction A-1,
MFR(A) is the melt flow rate $MFR_2$ (230 °C) [g/10min] of the C2C3 random copolymer (A),
MFR(A2) is the calculated melt flow rate $MFR_2$ (230 °C) [g/10min] of the polymer fraction A-2.

$MFR_2$ (230°C) was measured according to ISO 1133 at 230 °C and a load of 2.16 kg load).

### Quantification of microstructure by NMR spectroscopy

Quantitative nuclear-magnetic resonance (NMR) spectroscopy was further used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k)

transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio-defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**The xylene solubles (XCS, wt.-%):**

Content of xylene cold solubles (XCS) is determined at 25 °C according ISO 16152; 2005

**DSC analysis, melting temperature ($T_m$) and crystallization temperature ($T_c$):**

measured with a TA Instrument Q2000 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225 °C.

Crystallization temperature ($T_c$) and crystallization enthalpy ($H_e$) are determined from the cooling step, while melting temperature ($T_m$) and melting enthalpy ($H_m$) are determined from the second heating step.

**Rheology (polydispersity index PI and zero shear viscosity)**

Small-amplitude oscillatory shear (SAOS) rheology experiments were done with the Anton Paar MCR501-CTD600 rheometer in nitrogen atmosphere, using a parallel plate setup (gap 1.3 mm, 25 mm diameter), following ISO 6721-1. Specimens of circular shape with a diameter of 25 mm and thickness of 2 to 3 mm were prepared first by

compression molding (200 °C, load of 100 kg·$cm^{-2}$) of the polymer samples. Specimens were placed between the plates, heated to the measurement temperature (220 °C) and after removing excess material (trimming) the specimen was kept at the measurement temperature for another five minutes before the experiment begun. Frequency sweeps were done in the linear viscoelastic regime (strain 2 -7 %) applying frequencies $\omega$ within $10^3$ to $10^{-2}$ rad·$s^{-1}$

The polydispersity index PI ($Pa^{-1}$) is defined as the inverse of the crossover modulus, Gc. The crossover modulus is the modulus level where elastic modulus of the melt (also called "storage modulus" G', ) and viscous (loss) modulus G" have the same value. PI = 1/Gc * $10^5$.

**Tensile modulus, tensile strength and strain at break in machine and transverse direction** were determined according to ISO 527-3 at 23 °C on blown films of 50 μm thickness produced as described below Testing was performed at a cross head speed of 1 mm/min.

**Transparency, haze and clarity** were determined according to ASTM D1003-00 on blown films with a thickness of 50 μm produced as indicated below.

**Gloss** in machine and transverse direction was measured according to ASTM D2457 at an angle of 45° on blown films with a thickness of 50 μm produced as indicated below.

**Tear resistance** (determined as Elmendorf tear (N)): Applies both for the measurement in machine direction (MD) and transverse direction (TD). The tear strength is measured using the ISO 6383/2 method. The force required to propagate tearing across a film sample is measured using a pendulum device. The pendulum swings under gravity through an arc, tearing the specimen from pre-cut slit. The film sample is fixed on one side by the pendulum and on the other side by a stationary clamp. The tear resistance is the force required to tear the specimen. The relative tear resistance (N/mm) is then calculated by dividing the tear resistance by the thickness of the film.

**Dart drop strength (DDI): Impact resistance by free-falling dart method**

The DDI was measured according to ISO 7765-1:1988 / Method A from the films as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

Standard conditions:

Conditioning time: > 96 h
Test temperature: 23 °C
Dart head material: phenolic
Dart diameter: 38 mm
Drop height: 660 mm
Results:
Impact failure weight - 50% [g].

**Optomechnical ability (OMA)** is understood as the ratio of mechanical (especially dart-drop strength (DDI) and tensile (MD)) behaviour, to optical performance, namely haze, wherein the mechanical properties are targeted to be as high as possible and the optical performance in the sense of haze is desired to be as low as possible.

The optomechanical ability (OMA) is determined according the formula given below:

$$OMA = \frac{Tensile\ Modulus\ (MD)[MPa] * DDI(g)}{Haze\ (50\ \mu m)[\%]}$$

All film properties were determined on monolayer blown films of 50 μm thickness produced on a Collin blown film line (Lab & Pilot Solution) as described below.

**Examples:**

**Preparation of SSC-C2C3 random copolymer**

Catalyst for the inventive examples

***Catalyst complex***

The following metallocene complex has been used as described in WO 2019/179959:

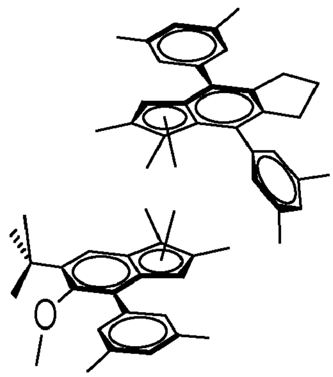

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60°C under nitrogen flow for 2 hours and then for 5 hours under vacuum (-0.5 barg) with stirring. MAO treated support was collected as a free-flowing white powder found to contain 12.2% Al by weight.

***Single site catalyst system 1 (SSCS1) preparation***

30 wt.% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2 h and additionally for 5 h under vacuum (-0.5 barg) under stirring.

Dried catalyst was sampled in the form of pink free flowing powder containing 13.9% Al and 0.11% Zr.

**Table 1: Polymerization conditions**

| **Polymer** | | SSC-C2C3PP |
|---|---|---|
| Catalyst | | SSCS1 |
| **Prepoly reactor** | | |
| Temp. | [°C] | 18 |
| Press. | [kPa] | 4994 |
| Residence time | [h] | 0.4 |
| **Loop reactor (A-1)** | | |
| Temp. | [°C] | 68 |
| Press. | [kPa] | 4985 |
| Feed H2/C3 ratio | [mol/kmol] | 0.1 |
| Feed C2/C3 ratio | [mol/kmol] | 15.3 |

(continued)

| | | |
|---|---|---|
| **Loop reactor (A-1)** | | |
| Polymer Split* | [wt.-%] | 60 |
| $MFR_2$* | [g/10 min] | 3.9 |
| Total C2* | [wt.-%] | 0.66 |
| Total C2* | [mol-%] | 0.99 |
| XCS* | [wt.-%] | 0.51 |
| **GPR (A-2)** | | |
| Temp. | [°C] | 83 |
| Press. | [kPa] | 2500 |
| H2/C3 ratio | [mol/kmol] | 0.7 |
| C2/C3 ratio | [mol/kmol] | 95.8 |
| Polymer Split | [wt.-%] | 40 |
| C2** | [wt.-%] | 3.01 |
| C2** | [mol-%] | 4.45 |
| $MFR_2$*** | [g/10 min] | 0.65 |
| **Pellet** | | |
| $MFR_2$ | [g/10 min] | 2.0 |
| PI [$10^5$/Gc] | [$Pa^{-1}$] | 2.24 |
| Total C2 | [wt.-%] | 1.6 |
| 2,1 erythro | [mol-%] | 0.61 |
| XCS | [wt.-%] | 0.49 |

* "$MFR_2$", "Total C2", "XCS" and "Polymer Split" are measured in the loop reactor, i.e. is the combination of Prepoly Reactor and Loop reactor and considered as the first propylene copolymer fraction (F1)
** "C2" is calculated from the "Total C2" measured in the loop reactor and "Total C2" measured from the pellet
*** "$MFR_2$" is calculated from the $MFR_2$ measured in the loop reactor and the $MFR_2$ of the pellet using the formula given above defining the measurement of $MFR_2$

As comparative example the commercial ZN-C2C3PP RB707CF of Borealis AG (Austria) was used. It is characterized by an $MFR_2$ of 1.5 g/10 min, a total C2 content of 4.3 wt.-%, an XCS of 7.5 wt.-% and a PI of 3.38 $Pa^{-1}$. The polymer is free of regio-defects.

**Table 2: Polymer compositions**

| | | IE | CE |
|---|---|---|---|
| SSC-C2C3PP | [wt.-%] | 98.25 | - |
| ZN-C2C3PP | [wt.-%] | - | 99.62 |
| AO1 | [wt.-%] | 0.10 | 0.21 |
| SHT | [wt.-%] | 0.05 | - |
| NA-1 | [wt.-%] | 0.10 | - |
| NA-2 | [wt.-%] | - | 0.11 |
| CaSt | [wt.-%] | - | 0.06 |

(continued)

| | | IE | CE |
|---|---|---|---|
| PA | [wt.-%] | 1.5 | - |
| "AO1" being a mixture of the sterically hindered phenol pentaerythrityl-tetrakis(3-(3',5'-di-tert. butyl-4-hydroxyphenyl)-propionate (CAS-no. 6683-19-8, commercially available as Irganox 1010 from BASF SE, Germany) and the phosphorous based antioxidant tris (2,4-di-t-butylphenyl) phosphite (CAS-no. 31570-04-4, commercially available as Irgafos 168 from BASF SE, Germany) in the weight ratio of 1:2;<br>"SHT" is the acid scavenger Hycite 713 of BASF SE, Germany, a magnesium/aluminium-hydrotalcite (CAS-no. 11097-59-9)<br>"NA-1" for IE is the commercial alpha-nucleating agent ADK STAB NA-71 of Adeka Corporation, Japan, a mixture comprising 2,2'-Methylenebis(2,4-di-tert-butylphenyl)phosphate lithium salt (CAS-no. 85209-93-4)<br>"NA-2" for CE is the commercial alpha-nucleating agent ADK STAB NA-21 from Adeka Corporation, Germany, being a hydroxybis (2,4,8,10-tetra-t-butyl-6-hydroxy-12H-dibenzo(d,g)(1,3,2) dioxaphosphocin 6-oxidato) aluminium/lithium myrisate blend (60:40), CAS-no 151841-65-5/20336-96-3<br>"CaSt" for CE is CEASIT FI (Ca-stearate, CAS No: 1592-23-0), commercially available from Baerlocher GmbH, Germany<br>"PA" for IE is POLYBATCH AMF 905, a processing masterbatch comprising flouroelastomer from LyondellBasell Industries (USA) | | | |

**Table 3: DSC properties of SSC-C2C3PP and ZN-C2C3PP**

| | | IE | CE |
|---|---|---|---|
| Tm1 | °C | 146 | 147 |
| Tm2 | °C | 135 | 133 |
| Tc | °C | 116 | 118 |
| Hm1 | J/g | 21.4 | 23.4 |
| Hm2 | J/g | 69.1 | 58.6 |

Blown films of 50 μm thickness were produced on a Collin blown film line (Lab & Pilot Solution) using a screw diameter of 30 millimeters (mm), LID of 30, a die diameter of 60 mm/respectively 50 mm, a die gap of 1.5 mm and a duo-lip cooling ring with 13 °C cooling air. The film samples were produced at different temperatures ($T_{melt}$) in the range of 210 to 240 °C (see Table 4) with an average thickness of 50 μm, with a blow-up ratio (BUR) (2, 2.5 or 3, see Table 4) and an output rate of about 8 kilograms per hour (kg/h), resulting in a reduction of the take up ratio (TUR) with increasing BUR. The neck length (NL) was either normal (pocket process), with 60 mm die diameter or long (stalk process) with 50 mm die diameter, as indicated in Table 4.

**Table 4: Film production parameters**

| Example | LN | BUR | $T_{melt}$ | TUR | PIF |
|---|---|---|---|---|---|
| | Normal/long | 1:x | °C | 1:x | °C |
| CE1 | Normal | 2 | 210 | 15 | 525 |
| CE2 | Long | 2.5 | 210 | 12 | 1050 |
| IE1 | Normal | 2 | 210 | 15 | 420 |
| IE2 | Normal | 2.5 | 210 | 12 | 525 |
| IE3 | Normal | 3 | 210 | 10 | 630 |
| IE4 | Normal | 2.5 | 240 | 12 | 600 |
| IE5 | Long | 2.5 | 210 | 12 | 1050 |

**Table 5: Film Parameters**

| Ex | Tensile MD | | | Tensile TD | | | Elmendorf tear resistance | | Anisotropy | | | Dart impact | Gloss 45° | | Optical | | OMA |
|---|---|---|---|---|---|---|---|---|---|---|---|---|---|---|---|---|---|
| | Modulus | Strength | Strain at break | Modulus | Strength | Strain at break | MD | TD | TM | S@B | TR | Method A | MD | TD | Haze | Clarity | |
| | MPa | MPa | % | MPa | MPa | % | N/mm | N/mm | - | - | - | 9 | % | % | % | % | |
| CE1 | 1070 | 47.8 | 551 | 1035 | 38.5 | 632 | 4.07 | 28.33 | 1.0 | 0.9 | 0.1 | 59 | 26.3 | 25.9 | 24.6 | 69.0 | 2566 |
| CE2 | 1056 | 42.3 | 582 | 1005 | 26.8 | 492 | 2.24 | 10.23 | 1.1 | 1.2 | 0.2 | 71 | 24.1 | 23.3 | 24.0 | 77.6 | 3218 |
| IE1 | 1563 | 41.1 | 448 | 1444 | 34.8 | 6,5 | 2.63 | 8.91 | 1.1 | 68.7 | 0.3 | 33 | 77.3 | 76.4 | 5.5 | 94.6 | 9378 |
| IE2 | 1585 | 39.3 | 448 | 1441 | 33.3 | 5,4 | 2.96 | 6.32 | 1.1 | 83.7 | 0.5 | 33 | 77.9 | 78.1 | 1.5 | 97.4 | 34870 |
| IE3 | 1634 | 37.8 | 269 | 1481 | 34.5 | 5,8 | 3.49 | 5.23 | 1.1 | 46.3 | 0.7 | 33 | 78.4 | 78.9 | 6.0 | 98.5 | 8987 |
| IE4 | 1625 | 37.6 | 259 | 1502 | 34.8 | 6,1 | 3.14 | 4.47 | 1.1 | 42.6 | 0.7 | 34 | 82.4 | 82.8 | 3.8 | 99.2 | 14539 |
| IE5 | 1614 | 40.1 | 382 | 1428 | 28.4 | 172 | 4.72 | 4.46 | 1.1 | 2.2 | 1.1 | 34 | 64.2 | 63.8 | 1.2 | 98.1 | 45730 |

As can be seen from Table 5, films produced according to the present invention have a better optics, i.e. lower haze and higher clarity, as well as improved stiffness and therefore improved overall performance (increased OMA).

## Claims

1. A process for producing blown films comprising an ethylene-propylene random copolymer (C2C3-RACO), the process comprises the steps of

   a) providing an ethylene-propylene random copolymer (C2C3-RACO) having

   - a melt flow rate ($MFR_2$), as determined according to ISO 1133 at 230°C and a load of 2.16 kg, in the range of 1.0 to 4.0 g/10 min,
   - an ethylene content, measured by $^{13}C$-NMR, in the range of 0.5 to 2.5 wt.-%,
   - a melting temperature, measured according to ISO 11357/part 3/ method C2, in the range of 135 to 155 °C
   - a polydispersity index PI ($10^5$/Gc), measured according to IDO 6271-1, in the range of 1.4 to 2.8 and
   - 2,1 erythro regio-defects, measured by $^{13}C$ NMR, in the range of > 0.10 to 1.00 mol-%,

   whereby the ethylene-propylene random copolymer (C2C3-RACO) optionally comprises one or more $\alpha$-nucleating agent(s) in an amount of 0 up to 0.5 wt.-%, based on the total weight of the ethylene-propylene random copolymer (C2C3-RACO),
   b) producing a blown film based on the C2C3-RACO, whereby the used blow-up ratio (BUR), neck length (NL) and melt temperature ($T_{melt}$) are correlated into a processing intensity factor (PIF) as defined by equation (I)

$$PIF = T_{melt}*BUR*NL\text{-}factor \quad (I),$$

   wherein the NL-factor is 1, in case a pocket process is used and
   wherein the NL-factor is 2, in case a stalk process is used,
   the processing intensity factor (PIF) being at least 400 °C,

   obtaining a blown film comprising the ethylene-propylene random copolymer (C2C3-RACO) having a film thickness in the range of 5 to 300 $\mu$m and having

   i) an Elmendorf tear resistance, measured according to ISO 6383/2 on a 50 $\mu$m blown film in machine direction (MD) in the range of 2.0 to 6.0 N/mm and in transverse direction (TD) in the range of 3.5 to 10.0 N/mm,
   ii) a haze, measured according to ASTM D 1003-00 on a 50 $\mu$m blown film in the range of 0.5 to 10.0% and
   iii) a mechanical anisotropy for the strain at break (S@B) in machine (MD) and transverse (TD) direction ($S@B_{MD}/S@B_{TD}$), whereby the stain at break in machine (MD) and transverse (TD) direction is measured according to ISO 527-3, in the range of 1.0 to 90.0.

2. The process according to claim 1, wherein the ethylene-propylene random copolymer (C2C3-RACO) has in addition

   a crystallization temperature, measured according to ISO 11357/part 3/ method C2, in the range of 110 to 130 °C, preferably in the range of from 112 to 125 °C, and more preferably in the range of from 114 to 120 °C and
   a xylene cold soluble (XCS) fraction, determined at 25 °C according to ISO 16152, in the range of 0.1 to 2.0 wt.-%, more preferably in the range of 0.2 to 1.5 wt.-%, more preferably in the range of 0.3 to 1.0 wt.-%.

3. The process according to claim 1 or 2, wherein the ethylene-propylene random copolymer (C2C3-RACO) comprises, preferably consists of,

   30.0 to 70.0 wt.-% of a polymer fraction (A-1) having

   (i) an ethylene content in the range of 0.2 to 3.0 wt.-% and
   (ii) a melt flow rate $MFR_2$, measured according to ISO 1133 at 230 °C and at a load of 2.16 kg, in the range of 2.0 to 5.0 g/10min and

   70.0 to 30.0 wt.-% of polymer fraction (A-2) having

(i) an ethylene content in the range of from 1.5 to 10.0 wt.-% and
(ii) a melt flow rate MFR2, measured according to ISO 1133 at 230 °C and at a load of 2.16 kg, in the range of from 0.1 to 3.0 g/10min,

whereby the melt flow rate $MFR_2$ of polymer fraction (A-2) is lower than the $MFR_2$ of polymer fraction (A-1) and whereby the ethylene content of polymer fraction (A-2) is higher than the ethylene content of polymer fraction (A-1) and
whereby the total amount of the first polymer fraction (A-1) and the second polymer fraction (A-2) together, based on the ethylene-propylene random copolymer, is at least 98 wt.-%, preferably the ethylene-propylene random copolymer consists of the first polymer fraction (A-1) and the second polymer fraction (A-2).

**4.** The process according to claim 3, wherein the ethylene-propylene random copolymer (C2C3-RACO) is **characterized by** the presence of at least two melting peak temperatures, whereby one melting peak temperature (Tm1) is in the range of 135 to 155 °C, preferably in the range of 138 to 152 °C, more preferably in the range of 140 to 150 °C and another melting peak temperature (Tm2) in the range of 130 to 139 °C, more preferably in the range of 131 to 137 °C, whereby the 2$^{nd}$ melting point (Tm2) is lower than the first melting point (Tm1).

**5.** The process according to any one of the preceding claims, wherein the ethylene-propylene random copolymer (C2C3-RACO) includes at least one alpha-nucleating agent in the range of 0.01 to 0.5 wt.-%, preferably in the range of 0.03 to 0.4 wt.-%, most preferably in the range of 0.05 to 0.3 wt.-%, based on the total weight of the ethylene-propylene random copolymer.

**6.** The process according to any one of the preceding claims, wherein

the processing intensity factor (PIF) is at least 600 °C, more preferably at least 800 °C and yet more preferably at least 1000 °C,
the melt temperature ($T_{melt}$) is in the range 180 to 260 °C, preferably in the range of 190 to 250 °C, more preferably in the range of 200 to 250 °C and most preferably in a range of 205 to 245 °C and
the blow up ratio is in the range of from 1.5 to 4.0, preferably in the range of from 2.0 to 3.5 and more preferably in the range of from 2.0 to 3.0.

**7.** The process according to any one of the preceding claims, wherein the blown film is produced with a stalk process, i.e. high neck extrusion, thus the NL-factor being 2.

**8.** The process according to any one of the preceding claims, wherein cooling of the blown film is done by cooling by water or preferably by blowing gas, preferably air, at a temperature of 5 to 50 °C, preferably at 5 to 25 °C, more preferably in the range of 10 to 18 °C.

**9.** The process according to any one of the preceding claims, wherein the obtained blown film furthermore has
a mechanical anisotropy for the Elmendorf tear resistance (TR) in machine (MD) and transverse (TD) direction ($TR_{MD}/TR_{TD}$), whereby the Elmendorf tear resistance in machine (MD) and transverse (TD) direction is measured according to ISO 6383/2, in the range of 0.2 to 1.1, preferably 0.3 to 1.1, more preferably 0.5 to 1.1, yet more preferably 0.7 to 1.1 and most preferably 0.9 to 1.1.

**10.** The process according to any one of the preceding claims, wherein the obtained blown film has a mechanical anisotropy for the strain at break (S@B) in machine (MD) and transverse (TD) direction ($S@B_{MD}/S@B_{TD}$), whereby the stain at break in machine (MD) and transverse (TD) direction is measured according to ISO 527-3 on a 50 μm blown film, in the range of 2.0 to 5.5.

**11.** The process according to any one of the preceding claims, wherein the obtained blown film has one or more, preferably two or more, most preferably all of parameters iv) to viii)

iv) a tensile modulus in machine (MD) and transverse (TD) direction, measured according to ISO 527-3 on a 50 μm blown film, in the range of 1350 to 1700 MPa, preferably 1400 to 1650 MPa,
v) a mechanical anisotropy for the tensile modulus (TM) in machine (MD) and transverse (TD) direction ($TM_{MD}/TD_{TD}$), whereby the tensile modulus in machine (MD) and transverse (TD) direction is measured according to ISO 527-3 on a 50 μm blown film, in the range of 0.8 to 1.3, preferably in the range of 0.9 to 1.2, more preferably 1.0 to 1.1,

vi) a clarity in machine (MD) and transverse (TD) direction, determined according to ASTM D1003-00 on blown films with a thickness of 50 μm of at least 50.0% up to 100.0%, preferably of at least 55.0% to 90.0% and more preferably of at least 60.0% up to 85.0%.
vii) a gloss, determined at 45° according to ASTM D2457 on blown films with a thickness of 50 μm of at least 93.0% up to 100.0%, preferably of at least 95.0% up to 100.0% and more preferably of at least 97.0% up to 100.0%,
viii) a dart drop impact strength (DDI), measured according to ISO 7765-1:1988 / Method A on a 50 μm blown film, in the range of 25 to 50 g, preferably 28 to 45 g and more preferably 30 to 40 g.

**12.** The process according to any one of the preceding claims, wherein the obtained blown film has an optomechanical ability (OMA) determined according the formula:

$$OMA = \frac{Tensile\ Modulus\ (MD)[MPa] * DDI(g)}{Haze\ (50\ \mu m)[\%]}$$

on 50 μm blown film of at least 5000 [MPa*g/%] up to 80000 [MPa*g/%], preferably in the range of from 6000 [MPa*g/%] up to 70000 [MPa*g/%], and more preferably in the range of from 8000 [MPa*g/%] up to 50000 [MPa*g/%].

**13.** A blown film obtainable according to the process according to claims 1 to 12.

**14.** The blown film according to claim 13, wherein the blown film has at least

i) an Elmendorf tear resistance, measured according to ISO 6383/2 on a 50 μm blown film in machine direction (MD) in the range of 2.0 to 6.0 N/mm and in transverse direction (TD) in the range of 3.5 to 10.0 N/mm
ii) haze, measured according to ASTM D 1003-00 on a 50 μm blown film in the range of 0.5 to 10.0% and
iii) mechanical anisotropy for the strain at break (S@B) in machine (MD) and transverse (TD) direction ($S@B_{MD}/S@B_{TD}$), whereby the stain at break in machine (MD) and transverse (TD) direction is measured according to ISO 527-3, in the range of 1.0 to 90.0.

**15.** The blown film according to claim 13 or 14, wherein the blown film has has one or more, preferably two or more, most preferably all of parameters iv) to viii)

iv) a tensile modulus in machine (MD) and transverse (TD) direction, measured according to ISO 527-3 on a 50 μm blown film, in the range of 1350 to 1700 MPa, preferably 1400 to 1650 MPa,
v) a mechanical anisotropy for the tensile modulus (TM) in machine (MD) and transverse (TD) direction ($TM_{MD}/TD_{TD}$), whereby the tensile modulus in machine (MD) and transverse (TD) direction is measured according to ISO 527-3 on a 50 μm blown film, in the range of 0.8 to 1.3, preferably in the range of 0.9 to 1.2, more preferably 1.0 to 1.1,
vi) a clarity in machine (MD) and transverse (TD) direction, determined according to ASTM D1003-00 on blown films with a thickness of 50 μm of at least 50.0% up to 100.0%, preferably of at least 55.0% to 90.0% and more preferably of at least 60.0% up to 85.0%,
vii) a gloss, determined at 45° according to ASTM D2457 on blown films with a thickness of 50 μm of at least 93.0% up to 100.0%, preferably of at least 95.0% up to 100.0% and more preferably of at least 97.0% up to 100.0%,
viii) a dart drop impact strength (DDI), measured according to ISO 7765-1:1988 / Method A on a 50 μm blown film, in the range of 25 to 50 g, preferably 28 to 45 g and more preferably 30 to 40 g,

and in addition an optomechanical ability (OMA) determined according the formula:

$$OMA = \frac{Tensile\ Modulus\ (MD)[MPa] * DDI(g)}{Haze\ (50\ \mu m)[\%]}$$

on 50 μm blown film of at least 5000 [MPa*g/%] up to 80000 [MPa*g/%], preferably in the range of from 6000 [MPa*g/%] up to 70000 [MPa*g/%], and more preferably in the range of from 8000 [MPa*g/%] up to 50000 [MPa*g/%].

Europäisches Patentamt
European Patent Office
Office européen des brevets

# EUROPEAN SEARCH REPORT

Application Number
EP 24 16 7141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2020/239562 A1 (BOREALIS AG [AT]) 3 December 2020 (2020-12-03) * claims; examples IE1,IE2; tables 1-3 * ----- | 1-15 | INV. C08J5/18 C08F4/00 C08F4/72 C08L23/14 |
| A | WO 2021/233770 A1 (BOREALIS AG [AT]) 25 November 2021 (2021-11-25) * claims; examples IE1,IE2; tables 1-3 * ----- | 1-15 | |
| A | WO 2021/063974 A1 (BOREALIS AG [AT]) 8 April 2021 (2021-04-08) * claims; example IE1; tables 1-3 * ----- | 1-15 | |

TECHNICAL FIELDS SEARCHED (IPC)

C08J
C08F

The present search report has been drawn up for all claims

| Place of search | Date of completion of the search | Examiner |
|---|---|---|
| Munich | 27 August 2024 | Frison, Céline |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 16 7141

This annex lists the patent family members relating to the patent documents cited in the above-mentioned European search report. The members are as contained in the European Patent Office EDP file on
The European Patent Office is in no way liable for these particulars which are merely given for the purpose of information.

27-08-2024

| Patent document cited in search report | Publication date | Patent family member(s) | Publication date |
|---|---|---|---|
| WO 2020239562 A1 | 03-12-2020 | CN 114008088 A | 01-02-2022 |
| | | EP 3976676 A1 | 06-04-2022 |
| | | ES 2949942 T3 | 04-10-2023 |
| | | US 2022145058 A1 | 12-05-2022 |
| | | WO 2020239562 A1 | 03-12-2020 |
| WO 2021233770 A1 | 25-11-2021 | BR 112022022300 A2 | 20-12-2022 |
| | | CN 115485120 A | 16-12-2022 |
| | | EP 3912793 A1 | 24-11-2021 |
| | | ES 2925719 T3 | 19-10-2022 |
| | | US 2023174728 A1 | 08-06-2023 |
| | | WO 2021233770 A1 | 25-11-2021 |
| WO 2021063974 A1 | 08-04-2021 | CN 116249743 A | 09-06-2023 |
| | | EP 4038137 A1 | 10-08-2022 |
| | | ES 2952233 T3 | 30-10-2023 |
| | | US 2022363880 A1 | 17-11-2022 |
| | | WO 2021063974 A1 | 08-04-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020239562 A
- EP 4253453 A1
- WO 2019179959 A
- WO 9414856 A
- WO 9512622 A
- WO 2006097497 A
- WO 03051934 A
- EP 0887379 A
- WO 9212182 A
- WO 2004000899 A
- WO 2004111095 A
- WO 9924478 A
- WO 9924479 A
- WO 0068315 A
- WO 2015082379 A
- WO 2015011134 A
- US 4582816 A
- US 3405109 A
- US 3324093 A
- EP 479186 A
- US 5391654 A
- EP 887379 A
- EP 887380 A
- EP 887381 A
- EP 991684 A


### Non-patent literature cited in the description


- **HANS ZWEIFEL**. Plastics Additives Handbook, 967-990
- **NELLO PASQUINI**. Polypropylene Handbook, 412-414
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **CHENG, H. N.** *Macromolecules*, 1950, vol. 17, 1984
- **L. RESCONI** ; **L. CAVALLO** ; **A. FAIT** ; **F. PIEMONTESI**. *Chem. Rev.*, 2000, vol. 100 (4), 1253
- **CHENG, H. N.** *Macromolecules*, 1984, vol. 17, 1950
- **W-J. WANG** ; **S. ZHU**. *Macromolecules*, 2000, vol. 33, 1157
- **WANG, W-J.** ; **ZHU, S.** *Macromolecules*, 2000, vol. 33, 1157
- **KAKUGO, M.** ; **NAITO, Y.** ; **MIZUNUMA, K.** ; **MIYATAKE, T.** *Macromolecules*, 1982, vol. 15, 1150
- *CHEMICAL ABSTRACTS*, 6683-19-8
- *CHEMICAL ABSTRACTS*, 31570-04-4
- *CHEMICAL ABSTRACTS*, 11097-59-9
- *CHEMICAL ABSTRACTS*, 85209-93-4
- *CHEMICAL ABSTRACTS*, 151841-65-5/20336-96-3
- *CHEMICAL ABSTRACTS*, 1592-23-0